(19) **Europäisches Patentamt**

**European Patent Office**

**Office européen des brevets**

(11) **EP 1 405 831 B1**

(12) **FASCICULE DE BREVET EUROPEEN**

(45) Date de publication et mention
de la délivrance du brevet:
**23.08.2006 Bulletin 2006/34**

(51) Int Cl.:
*C03B 9/16* *(2006.01)*    *C03B 9/193* *(2006.01)*
*C03B 9/36* *(2006.01)*

(21) Numéro de dépôt: **03356143.2**

(22) Date de dépôt: **02.10.2003**

(54) **Procédé et installation pour la fabrication d'un article de verre creux avec phase d'étirage de l'ébauche**

Verfahren und Vorrichtung zur Herstellung von einem holen Glasartikel mit einer Ziehphase des Kübels

Process and apparatus for manufacturing a hollow glass article comprising a parison stretching step

(84) Etats contractants désignés:
**AT BE BG CH CY CZ DE DK EE ES FI FR GB GR HU IE IT LI LU MC NL PT RO SE SI SK TR**

(30) Priorité: **04.10.2002 FR 0212327**

(43) Date de publication de la demande:
**07.04.2004 Bulletin 2004/15**

(73) Titulaire: **BSN Glasspack**
**69100 Villeurbanne (FR)**

(72) Inventeurs:
 • **Rombouts, Max**
  **6269 GD Margraten (NL)**

 • **van Reijmersdal, Chris**
  **6325 EA Berg en Terblijt (NL)**
 • **Pajean, Gérard**
  **69390 Charly (FR)**
 • **Rattana, Sisavèng**
  **69100 Villeurbanne (FR)**

(74) Mandataire: **Le Cacheux, Samuel L.R.**
  **Cabinet Beau de Loménie,**
  **51, avenue Jean-Jaurès,**
  **B.P. 7073**
  **69301 Lyon Cedex 07 (FR)**

(56) Documents cités:
  **FR-A- 2 808 019**    **US-A- 4 276 073**

**Description**

La présente invention concerne le domaine technique de la fabrication d'articles en verre creux à partir d'une goutte de verre en fusion amenée à subir différentes opérations de moulage.

De manière générale, la production d'un article en verre creux, possédant une section ouverte, telle que, par exemple, un pot, un bocal ou encore une bouteille, s'effectue en formant tout d'abord une ébauche à partir de la goutte de verre en fusion, appelée aussi « gob « ou paraison, au sein d'un moule ébaucheur.

Cette ébauche est alors transférée dans un moule finisseur au niveau de laquelle l'ébauche subit une élongation pour ensuite être gonflée à l'intérieur du moule finisseur, afin d'obtenir l'article en verre creux qui se trouve alors extrait du moule finisseur.

Cette fabrication se trouve, généralement, effectuée en cycle continu sur une même machine, de sorte que cette dernière répète ces opérations selon une période prédéterminée.

Différentes techniques peuvent être mises en oeuvre pour assurer le formage de l'ébauche, par exemple le soufflage de cette dernière au sein du moule ébaucheur ou le pressage au moyen d'un poinçon engagé dans le moule ébaucheur.

De même, le gonflage de l'ébauche, de manière à obtenir le produit en verre creux, peut, soit résulter de l'injection d'un gaz sous pression dans l'ébauche, soit d'une mise en dépression du moule finisseur.

Quelle que soit la technique retenue pour assurer la formation de l'ébauche et le gonflage de cette dernière de manière à obtenir l'article en verre creux, l'étirement de l'ébauche au sein du moule finisseur peut, soit être spontané et résulter de la simple pesanteur, l'ébauche s'étirant sous l'effet de son poids propre, soit, au contraire, être assisté mécaniquement au moyen d'un dispositif de traction.

L'invention concerne, plus particulièrement, le domaine de la fabrication des articles en verre creux faisant intervenir un étirement assisté de l'ébauche.

En effet, la mise en oeuvre d'un tel étirement assisté, tel que, par exemple, décrit par le brevet US 4 276 073 ou, encore, la demande de brevet FR 2 808 019, présentent l'avantage de permettre une diminution de la durée totale du cycle de fabrication. L'étirement assisté permet également, par ce raccourcissement du temps de cycle, de réduire la température de la goutte de verre utilisée, dans la mesure où l'étirement étant assisté mécaniquement, il n'est plus nécessaire que l'ébauche de verre en fusion soit suffisamment liquide pour s'étirer spontanément sous l'effet de son propre poids.

Un autre avantage de la technique, de l'étirement assisté, réside dans la possibilité de mettre en oeuvre une goutte de verre en fusion de moindre poids et d'obtenir un article de verre creux de moindre épaisseur à qualité mécanique équivalente, dans la mesure où le verre se trouve réparti de façon plus uniforme dans le volume du produit creux.

Les techniques, décrites par les documents précités, permettent, effectivement, de mettre en oeuvre un tel étirement assisté, de manière à obtenir un procédé présentant les avantages évoqués précédemment.

Cependant, il est apparu que les performances des procédés de fabrication selon l'art antérieur pouvaient encore être améliorées, afin de réduire les temps de cycles et d'obtenir des produits en verre creux présentant de meilleures caractéristiques mécaniques et esthétiques.

Il est notamment apparu qu'une amélioration susbstantielle du procédé de fabrication résidait dans la gestion de la prise en charge de l'ébauche non étirée par le dispositif de traction, tant en ce qui concerne l'instant de prise en charge dans le cycle de fabrication que le dispositif au niveau duquel la liaison entre le système de traction et l'ébauche intervient.

Ainsi, afin d'améliorer la technique de fabrication d'articles en verre creux à étirage assisté, l'invention concerne un procédé de fabrication d'au moins un article en verre creux selon un cycle de fabrication consistant, notamment, à :

- ■ former une ébauche à partir d'une goutte de verre en fusion au sein d'un moule ébaucheur,
- ■ transférer l'ébauche dans un moule finisseur comprenant, dans une cavité de moulage, une ventouse de traction mobile en translation parallèle à l'axe du moule sur une course d'étirement entre, d'une part, une position d'extension à l'intérieur du moule et, d'autre part, une position de rétraction dans laquelle la ventouse est située au niveau du fond du moule,
- ■ établir une dépression au niveau de la ventouse pour lier le fond de l'ébauche à la ventouse placée en position d'extension,
- ■ déplacer la ventouse jusqu'en position de rétraction pour étirer l'ébauche,
- ■ rétablir la pression atmosphérique au niveau de la ventouse,
- ■ gonfler l'ébauche étirée à l'intérieur du moule finisseur, afin d'obtenir l'article creux en verre,
- ■ ouvrir le moule finisseur,
- ■ et extraire l'article creux en verre du moule finisseur.

Selon l'invention, ce procédé de fabrication est caractérisé en ce qu'il consiste à établir la dépression au niveau de la ventouse avant que le fond de l'ébauche ne soit au contact de la ventouse.

Il est apparu que l'établissement de la dépression au niveau de la ventouse, avant que le fond de l'ébauche ne soit au contact de cette dernière, permettait de réduire le temps nécessaire à la stabilisation de l'ébauche, suite à son transfert depuis le moule ébaucheur jusque dans le moule finisseur, permettant, par là même, de réduire le temps total du cycle de fabrication. En effet, l'établissement d'une dépression au niveau de la ventouse permet de forcer le placement de l'ébauche dans l'axe du moule ou de la cavité de moulage, de sorte que son balancement se trouve maîtrisé.

Selon une caractéristique de l'invention, la dépression au niveau de la ventouse est établie lorsque la distance entre la ventouse et le fond de l'ébauche est inférieure à 10 mm et, de préférence, comprise entre 1,5 mm et 2,5 mm.

Selon une autre caractéristique de l'invention, la dépression au niveau de la ventouse est assurée, après un déroulement de 83 % à 90 % du cycle de fabrication et, de préférence, après un déroulement de 84,16 % à 85,28 % du cycle de fabrication, le début du cycle de fabrication étant considéré comme pris au moment où le moule ébaucheur est fermé et vide avant l'introduction de la goutte de verre en fusion.

Selon encore une autre caractéristique de l'invention, le déplacement de la ventouse intervient après l'établissement de la dépression au niveau de ladite ventouse avec un décalage temporel d'une durée comprise entre 0,25 % et 3,5 % de la durée totale du cycle de fabrication et, de préférence, avec un décalage temporel compris entre 0,25 % et 2 % de la durée totale du cycle de fabrication ou de la période de ce cycle dans le cadre d'une fabrication en continu.

Par ailleurs, il a été constaté que le meilleur gain en performance du procédé de fabrication était assuré lorsque la durée de la course d'étirement assistée est inférieure à la moitié du temps mis par l'ébauche pour atteindre une même valeur d'étirement total sous l'effet de son propre poids.

De manière préférée mais non strictement nécessaire, la course d'étirement assistée est alors comprise entre 13 % et 18 % de la durée totale du cycle de fabrication et, de manière optimale, entre 10 % et 15 % de la durée totale du cycle de fabrication.

Selon une autre caractéristique de l'invention, le procédé de fabrication est mis en oeuvre en déplaçant la ventouse en phase d'étirement de l'ébauche en faisant varier sa vitesse au cours du déplacement. De manière préférée, la vitesse de la ventouse en phase d'étirement est régulée de manière à la faire varier jusqu'à atteindre une vitesse maximale comprise entre 100 mm/s et 300 mm/s.

Selon une autre caractéristique de l'invention, la valeur de la dépression, établie au niveau de la ventouse, est inférieure à - $0,4.10^5$ Pa et, de préférence, comprise entre - $0,8.10^5$ Pa et - $0,5.10^5$ Pa.

Par ailleurs, il a été constaté que de très bons résultats de fabrication étaient obtenus lorsque la goutte de verre en fusion possède, au moment de son introduction dans le moule ébaucheur, une température comprise entre 1 100 °C et 1 200 °C.

De même, il a été constaté que la qualité de l'article de verre produit pouvait être optimisé en contrôlant la température de la ventouse avec laquelle l'ébauche vient en contact pendant la phase d'étirement. Ainsi, selon une caractéristique de l'invention, afin d'éviter une trop forte élévation de la température de la ventouse, le procédé de fabrication consiste, après extraction de l'article de verre hors du moule finisseur, à injecter un fluide de refroidissement dans la ventouse. Ainsi, une grande qualité de produit est obtenue lorsque la ventouse est maintenue à une température inférieure à 500 °C et, de préférence, comprise entre 400 °C et 500 °C.

Selon une caractéristique de l'invention, afin d'assurer ce refroidissement de la ventouse, le fluide utilisé est de l'air comprimé fourni à une pression comprise entre $3,3.10^5$ Pa et $7.10^5$ Pa et présentant une température comprise entre 20 °C et 50 °C.

Il est également apparu possible d'optimiser la prise en charge de l'ébauche dans le moule fournisseur par la ventouse de traction en formant l'ébauche de manière qu'elle présente, lors de son introduction dans le moule finisseur, un fond concave. Les meilleurs résultats sont alors obtenus lorsque l'ébauche est formée, de manière que la profondeur maximum de la concavité de son fond soit comprise entre 1 mm et 30 mm et, de préférence, entre 1 mm et 5 mm.

Dans le même sens, il est apparu que les meilleurs résultats étaient obtenus lorsque l'ébauche présente une hauteur comprise entre 30 % et 75 % de la hauteur du moule finisseur.

Selon l'invention, le gonflage de l'ébauche peut être assuré, soit par une mise en dépression du moule finisseur, soit par un soufflage de gaz dans l'ébauche, tel que, par exemple, de l'air comprimé.

Selon l'invention, le procédé de fabrication peut être mis en oeuvre pour assurer la fabrication simultanée de **n** articles creux en verre identiques. Le procédé selon l'invention consiste alors, notamment à :

■ former **n** ébauches de **n** moules ébaucheurs,
■ transformer simultanément les **n** ébauches dans **n** moules finisseurs comprenant chacun, dans leur cavité de moulage, une ventouse de traction mobile en translation parallèle à l'axe du moule sur une course d'étirement entre une translation parallèle à l'axe du moule sur une course d'étirement, entre une position d'extension à l'intérieur de la cavité de moulage et une position de rétraction dans laquelle la ventouse est située, au niveau du fond de la cavité de moulage,
■ établir simultanément la dépression au niveau des **n** ventouses,

■ déplacer simultanément les **n** ventouses jusqu'en position de rétraction,

■ rétablir simultanément la pression atmosphérique au niveau des **n** ventouses,

■ gonfler simultanément les **n** ébauches étirées,

■ ouvrir simultanément les **n** moules finisseurs,

■ et extraire simultanément les **n** articles creux des **n** moules finisseurs.

Selon le mode de déplacement retenu pour le transfert des ébauches, depuis le moule ébaucheur jusqu'au moule finisseur, ces dernières présentent une conformation différente à leur arrivée dans le moule finisseur. Afin de tenir compte de ces différences, le procédé de fabrication conforme à l'invention consiste à adopter, pour les ventouses des moules, des longueurs de courses différentes.

Ainsi, dans le cadre de la mise en oeuvre pour le transfert des ébauches d'un mécanisme basculeur qui, par une rotation de 180° autour d'un axe horizontal, assure l'extraction des ébauches hors des moules ébaucheurs et leur engagement avec une inversion d'orientation dans les moules finisseurs, le procédé selon l'invention consiste à adopter, pour les ventouses, des courses d'étirement décroissantes au fur et à mesure de l'éloignement des moules finisseurs par rapport à l'axe de rotation du mécanisme basculeur. En effet, plus les ébauches sont éloignées de l'axe de rotation du mécanisme basculeur, plus elles subissent une force centrifuge importante qui contribue à une augmentation de leur étirement lors de leur introduction dans le moule finisseur et de la rotation du mécanisme de transfert.

L'invention concerne, également, une installation pour la fabrication d'au moins un article creux en verre comprenant au moins un ensemble de moulage qui comprend :

■ un moule ébaucheur comprenant deux demi-corps ébaucheurs et un fond ébaucheur définissant ensemble une empreinte d'ébauche,

■ un moule finisseur qui comprend deux demi-corps finisseurs et un fond finisseur définissant une cavité de moulage, ainsi que des moyens d'étirage assisté comprenant :

-    une ventouse portée par un organe mobile en translation selon l'axe du moule pour déplacer la ventouse entre, d'une part, une position d'extension dans le moule et, d'autre part, une position de rétraction dans laquelle la ventouse est située au niveau du fond du moule,

-    des moyens moteurs pour manoeuvrer l'organe mobile,

-    un circuit pneumatique raccordé à la ventouse,

■ un élément de bague et des moyens de transfert alternatif de l'élément de base entre le moule ébaucheur et le moule finisseur.

Selon l'invention, l'installation est caractérisée en ce que :

■ la ventouse présente une surface centrale d'aspiration raccordée au circuit pneumatique et une surface périphérique étanche à l'air,

■ et la surface d'aspiration de la ventouse présente un diamètre $D_{max}$ maximum égal au diamètre moyen $D_{moy}$ de l'ébauche à étirer.

Cette caractéristique de l'invention permet d'assurer une parfaite maîtrise des contraintes exercées par la ventouse sur l'ébauche lors de sa prise en charge, ainsi que lors de son étirage et éviter ainsi l'apparition de défauts d'aspect et de structure sur l'article de verre fabriqué au moyen de l'installation selon l'invention.

Selon une caractéristique de l'invention, le moule ébaucheur comprend un poinçon et le diamètre moyen $D_{moy}$ de l'ébauche vérifie la relation suivante :

$$\frac{\pi}{4}(D_{moy})^2\, hp = \frac{Ve + Vp}{2}$$

où :

-    **hp** est la hauteur de l'ébauche hors bague,

-    **Ve** est le volume de l'empreinte d'ébauche,

-    **Vp** est le volume de l'empreinte du poinçon hors bague.

Selon l'invention, la surface d'aspiration de la ventouse peut être réalisée de toute manière appropriée. Selon une caractéristique de l'invention, la surface d'aspiration de la ventouse est constituée par un matériau poreux, tel que, par exemple mais non exclusivement, du métal fritté ou, encore, de la céramique.

Selon une autre caractéristique de l'invention, la surface d'aspiration de la ventouse est réalisée dans un métal présentant de bonnes caractéristiques de conductivité thermique et comprend, à sa surface, un moletage complété par une gorge périphérique annulaire collectrice raccordée au circuit pneumatique.

La mise en oeuvre d'une ventouse d'aspiration présente l'avantage d'assurer un contact intime entre la ventouse et l'ébauche, de sorte qu'il est possible d'assurer le moulage, au niveau du fond de l'article de verre creux, d'éléments décoratifs relativement fins, ainsi que l'inscription d'informations au moyen de signes et de symboles également relativement fins.

Selon une caractéristique de l'invention, afin de permettre un refroidissement optimal de la ventouse, cette dernière présente des ailettes de refroidissement internes s'étendant dans un conduit de raccordement de la ventouse au circuit pneumatique.

Selon une autre caractéristique de l'invention, la ventouse est intégrée au fond du moule finisseur qui se trouve déplaçable en translation, de manière à former l'organe mobile en translation pour l'étirage de l'ébauche.

Selon une autre caractéristique de l'invention, afin de permettre une prise en charge optimale de l'ébauche par la ventouse d'étirage, le fond du moule ébaucheur est convexe, de manière que l'ébauche présente, lors de sa mise en place dans le moule finisseur, un fond concave. De manière préférée, la convexité du moule ébaucheur est comprise entre 1 mm et 30 mm.

L'invention concerne également un article de verre creux obtenu au moyen du procédé conforme à l'invention.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une coupe longitudinale schématique d'un moule ébaucheur constitutif d'une installation de fabrication pour la mise en oeuvre du procédé selon l'invention.

La **fig. 2** est une coupe longitudinale schématique d'un moule finisseur constitutif d'une installation destinée à mettre en oeuvre le procédé de fabrication conforme à l'invention.

Les **fig. 3** à **10** sont des vues schématiques d'une installation pour la fabrication simultanée de trois articles en verre creux, conformément à l'invention, selon différentes phases de mise en oeuvre.

La **fig. 11** est une coupe schématique montrant, à plus grande échelle, la distance existant entre le fond d'une ébauche et la surface d'aspiration d'une ventouse, au moment de la mise en dépression de la ventouse, conformément au procédé selon l'invention.

La **fig. 12** est une vue de dessus d'une ventouse conforme à l'invention.

La **fig. 13** est une coupe schématique partielle, sensiblement analogue à la **fig. 2,** d'une ébauche montrant la relation existant entre une surface d'aspiration de la ventouse et les dimensions de l'ébauche.

La **fig. 14** est une vue, sensiblement analogue à la **fig. 2,** d'un moule finisseur à l'intérieur duquel est disposée une ébauche.

La **fig. 15** est une vue, sensiblement analogue à la **fig. 13,** montrant un moule finisseur pour la formation d'un article en verre creux, tel qu'un pot à confiture.

La **fig. 16** est une coupe longitudinale d'une ébauche conforme à l'invention avant son étirement.

Les **fig. 17** et **18** sont des coupes longitudinales d'une ventouse de traction selon l'invention.

Les **fig. 19** et **20** sont des vues de dessus de ventouses conformes à l'invention.

Les **fig. 21** et **22** sont des coupes longitudinales, analogues aux **fig. 17** et **18,** montrant d'autres formes de réalisation d'une ventouse de traction selon l'invention.

La **fig. 23** est une coupe longitudinale d'un moule finisseur pour une installation de mise en oeuvre du procédé selon l'invention dont le fond est mobile en translation et intègre une ventouse de traction pour la mise en oeuvre du procédé de fabrication selon l'invention.

L'invention concerne des perfectionnements apportés aux procédés de fabrication d'articles creux en verre, selon un cycle de fabrication d'un article à partir d'une goutte de verre qui subit différentes opérations successives, permettant, tout d'abord, d'obtenir une ébauche puis, à partir de cette ébauche et par une opération, dite de gonflage, le produit en verre creux fini.

Ce procédé de fabrication permet ainsi d'obtenir des produits en verre creux, tels que des bouteilles à vin ou à bière ou tout autre produit, comme, par exemple, des pots alimentaires, tels que des pots à yaourts ou des pots à confiture.

L'installation pour la mise en oeuvre de ce procédé est généralement conçue pour assurer la fabrication d'un ou plusieurs articles simultanément. A cet effet, l'installation comprend un ou plusieurs ensembles de moulage selon le nombre d'articles fabriqués simultanément.

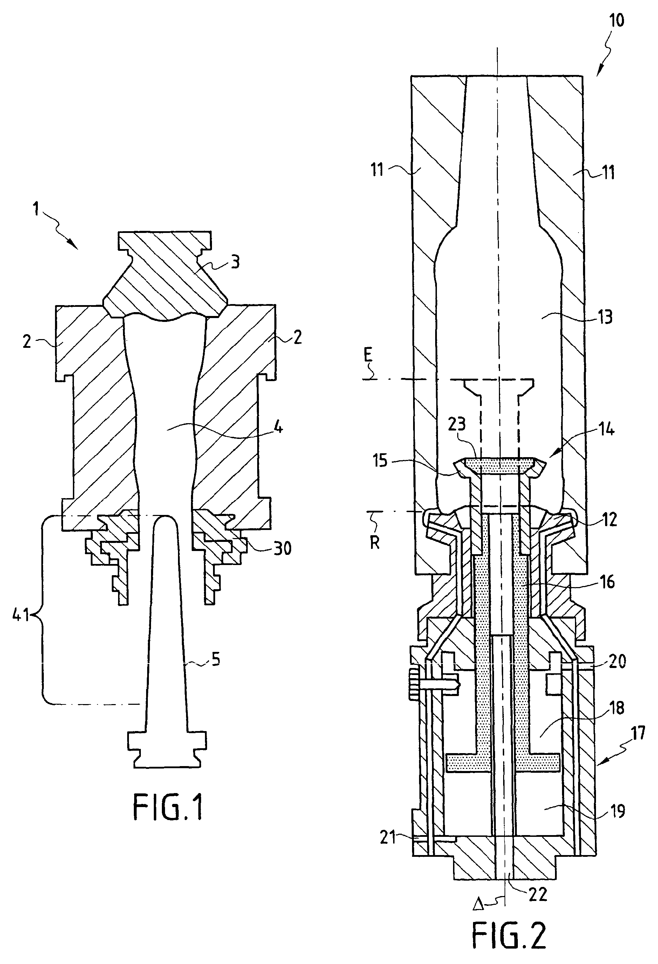

Chaque ensemble de moulage comprend alors au moins un moule ébaucheur, tel qu'illustré à la **fig. 1** et désigné dans son ensemble par la référence **1**. Le moule ébaucheur comprend, de manière générale, deux demi-corps ébaucheurs **2** et un fond ébaucheur **3** qui définissent ensemble une empreinte d'ébauche **4**. Selon l'exemple illustré, le moule ébaucheur **1** comprend, en outre, un poinçon de perçage **5** destiné à être introduit dans l'empreinte d'ébauche **4**, comme cela apparaîtra par la suite.

En plus du moule ébaucheur **1**, chaque ensemble de moulage comprend, en outre, un moule finisseur, tel qu'illustré à la **fig. 2** et désigné dans son ensemble par la référence **10**.

Le moule finisseur **10** comprend, de manière générale, deux demi-corps finisseurs **11** et un fond finisseur **12** qui définissent ensemble une cavité de moulage **13**. Afin de pouvoir assurer un étirage mécanique de l'ébauche conformément à une caractéristique essentielle de l'invention, et comme cela apparaîtra par la suite, le moule finisseur **10** comprend des moyens d'étirage assisté **14** qui comprennent une ventouse **15** portée par un organe **16**, tel que, par exemple, une tige mobile en translation selon l'axe Δ du moule, entre une position d'extension **E**, illustrée en trait mixte à la **fig. 2,** et une position de rétraction **R,** également illustrée en trait mixte. Dans cette position de rétraction **R,** la ventouse **15** se trouve située au niveau du fond **12** du moule en étant sensiblement encastrée dans ce dernier.

Afin de déplacer l'organe mobile **16**, les moyens d'étirage assisté **14** comprennent des moyens moteurs **17** qui peuvent être réalisés de toute façon appropriée et qui, selon l'exemple illustré, sont formés par un vérin pneumatique double effet. Les deux chambres **18** et **19** du vérin **17** sont alors raccordées par des lignes **20, 21** à un système de commande pneumatique non représenté. Les moyens d'étirage assisté comprennent, également, un circuit pneumatique **22,** raccordé à la ventouse **15**. Conformément à une caractéristique essentielle de l'invention, la ventouse **15** présente alors une surface centrale d'aspiration **23** qui se trouve raccordée au circuit pneumatique **22**.

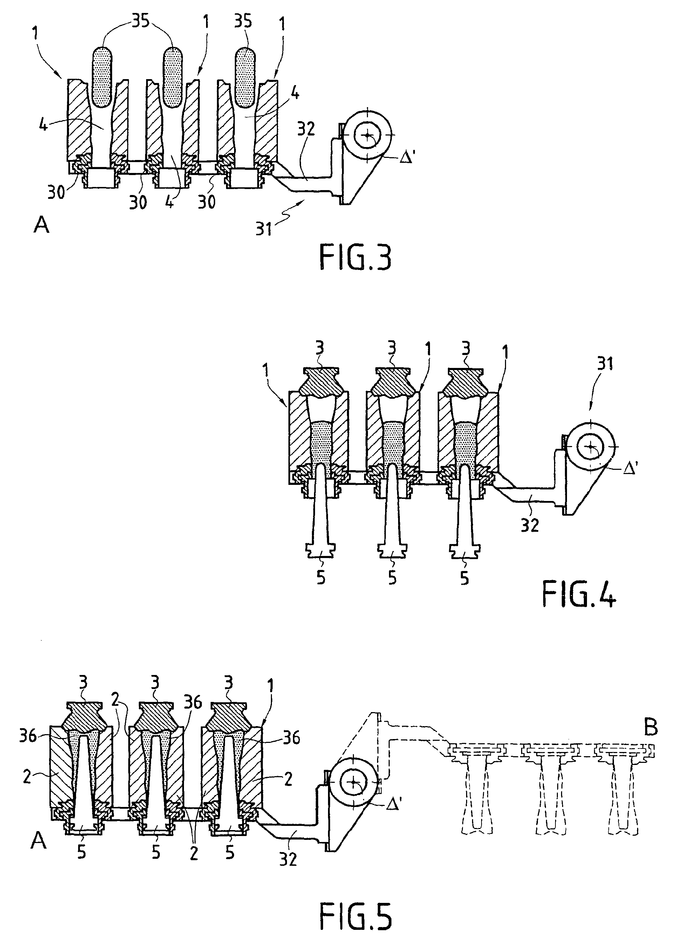

L'ensemble de moulage comprend, en outre, un élément de bague **30**, ainsi que des moyens de transfert **31** illustrés schématiquement à la **fig. 3**. Les moyens de transfert **31** sont alors adaptés pour permettre un déplacement alternatif de l'élément de bague **30** entre le moule ébaucheur **1** et le moule finisseur **10**, comme cela apparaîtra par la suite.

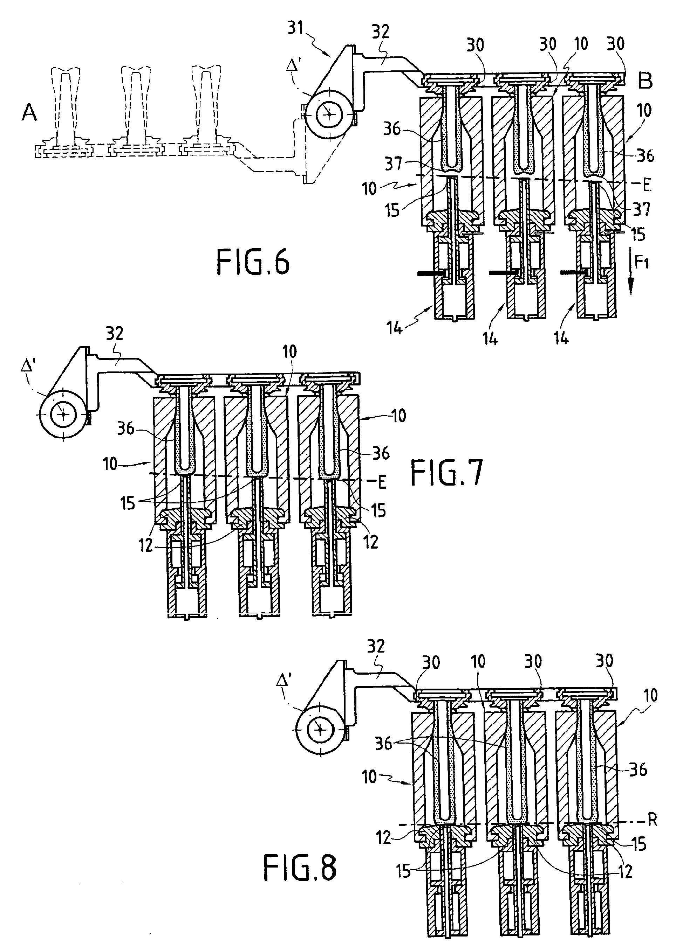

Selon l'exemple illustré, **fig. 3** à **10,** l'installation conforme à l'invention est adaptée pour assurer la fabrication simultanée de trois articles en verre creux, de sorte qu'elle comprend trois ensembles de moulages distincts. Selon cet exemple, les moyens de transfert **31** comprennent un bras basculeur **32** portant les trois éléments de bague **30** des ensembles de moulage. Le bras basculeur **32** est alors mobile en rotation autour d'un axe sensiblement horizontal Δ', entre une position **A**, telle qu'illustrée à la **fig. 3,** dans laquelle les éléments de bagues **30** sont placés en relation avec des moules ébaucheurs **1** correspondants et une position **B,** plus particulièrement illustrée à la **fig. 6,** dans laquelle les éléments de bagues **30** sont placés en relation avec les moules finisseurs **10** correspondants. Il est à noter que l'orientation des éléments de bague **30** se trouve inversée lors du passage du bras basculeur **32** de la position **A** à la position **B** et réciproquement.

La fabrication d'articles en verre creux au moyen de l'installation décrite précédemment s'effectue de la manière suivante.

En début de cycle de fabrication, une goutte de verre en fusion **35** est fournie par un mécanisme, appelé « feeder », non représenté, à chacun des trois moules ébaucheurs **1**. Chaque goutte de verre **35** se trouve alors engagée dans l'empreinte **4** par le fond ouvert du moule ébaucheur **1** correspondant. De manière préférée mais non strictement nécessaire, la goutte de verre est fournie aux moules ébaucheurs à une température comprise entre 1 100 °C et 1 200 °C.

Après cette première étape, dite de garnissage, intervient une étape, dite de pressage, illustrée aux **fig. 4** et **5**, au cours de laquelle les fonds de moules **3** sont placés pour venir fermer les moules ébaucheurs **1**, tandis que le poinçon de perçage **5** de chaque moule ébaucheur **1** est introduit dans le moule correspondant pour pénétrer la goutte de verre **35** qui subit l'opération, dite également de perçage, dont la première phase est illustrée **fig. 4** et qui s'achève par l'introduction complète du poinçon **5** dans le moule, assurant ainsi la conformation d'une ébauche **36** dans chaque moule ébaucheur **1** par la contrainte mécanique exercée par chaque poinçon **5** et conformant la goutte de verre **35** l'intérieur de l'empreinte d'ébauche **4**.

A la fin de cette opération de pressage, les moules ébaucheurs **1** sont couverts par retrait des fonds **3**, ouverture des demi-corps ébaucheurs **2** et retrait des poinçons **5**, de sorte que les ébauches **36** se trouvent libérées de l'emprise des moules ébaucheurs **1**, tout en restant solidaires des éléments de bague **30** correspondants.

A ce stade de la fabrication, intervient une phase de transfert des ébauches **36**, le bras basculeur **32** passant de la position **A** à sa position **B,** telle qu'illustrée **fig. 5,** de manière que les ébauches **36** puissent se trouver enfermées dans la cavité de coulage **13** des trois moules finisseurs **10** correspondants, comme le montre la **fig. 6**.

Dans cette position, à l'intérieur des moules finisseurs **10**, les ébauches **36** de verre en fusion possèdent une tendance naturelle à s'étirer sous l'effet de leur propre poids dans le sens de la flèche $f_1$. Cependant, afin d'accélérer cette phase, dite d'étirement, et donc de raccourcir la durée totale du cycle de fabrication d'un article de verre, les moules finisseurs **10** sont équipés des moyens d'étirage assisté **14**.

Suite au mouvement d'inversion, les ébauches **36** sont animées d'un mouvement de balancement et leur étirement ne peut intervenir que lorsqu'elles se trouvent sensiblement dans l'alignement de l'axe Δ des moules finisseurs **10**. Cependant, afin d'accélérer la stabilisation des ébauches **36** et conformément à une caractéristique essentielle de l'invention, une dépression est établie au niveau des ventouses **15** de chaque moule, avant même que le fond **37** de l'ébauche **36** ne soit au contact de la ventouse **15** correspondante, comme le montre la **fig. 6.**

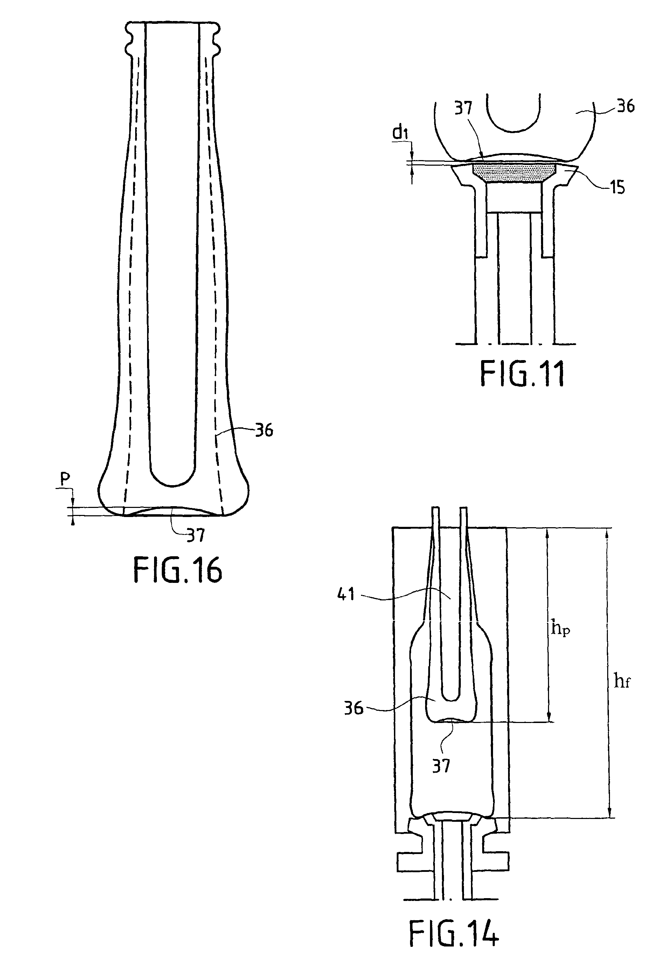

De manière préférée, la dépression, au niveau de chaque ventouse **15,** est établie lorsque la distance $d_1$, telle qu'illustrée en détail à la **fig. 11,** entre le fond de l'ébauche **36** et la ventouse **15**, est inférieure à 10 mm et, de préférence, comprise entre 1,5 mm et 2,5 mm.

L'établissement de la dépression, au niveau des ventouses **15** peut ainsi intervenir après un déroulement de 83 % à 90 % du cycle de fabrication d'un article de verre creux, le début du cycle correspondant à l'ordre de commande de fermeture du moule ébaucheur. De manière préférée, la dépression, au niveau des ventouses **15,** sera établie après un déroulement de 84,16 % à 85,28 % du cycle de fabrication.

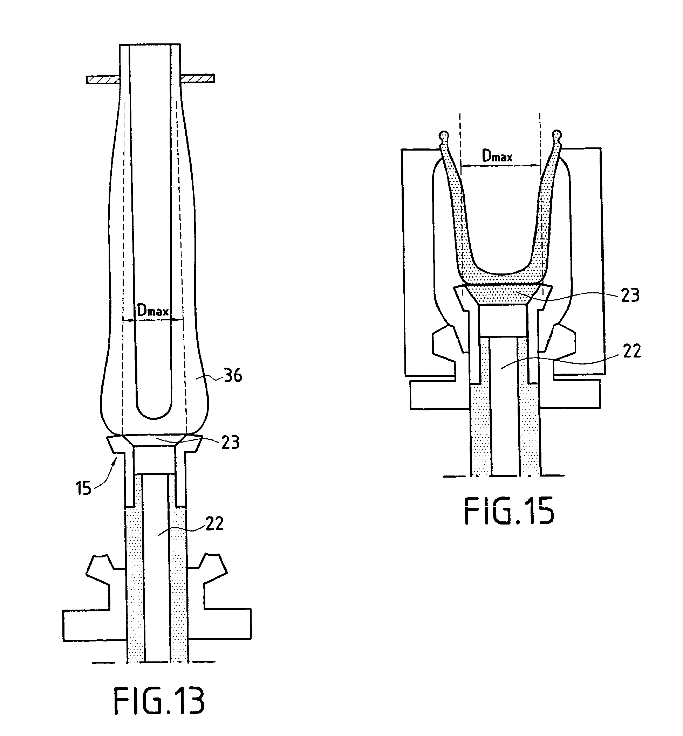

Conformément à une caractéristique essentielle de l'invention, afin d'éviter que l'établissement d'une dépression au niveau de la ventouse **15,** puis la phase d'étirement assisté, n'induisent dans l'ébauche des contraintes susceptibles de faire apparaître des défauts d'aspect, voire de structure, susceptibles de fragiliser le produit en verre creux obtenu en fin de fabrication, chaque ventouse **15** est réalisée de manière que sa surface d'aspiration **23** occupe une région centrale de la ventouse **15** et soit bordée par une surface périphérique **40** sensiblement étanche à l'air et, selon l'exemple illustré, lisse, comme le montre, en vue de dessus la **fig. 12.**

De plus, la surface d'aspiration **23** est conformée de manière à présenter un diamètre maximum $D_{max}$, sensiblement égal au diamètre moyen $D_{moy}$, représenté à la **fig. 13**, de l'ébauche **36** à étirer. Ce diamètre moyen $D_{max}$ est égal au diamètre moyen de la fibre neutre qui correspond à l'ensemble des diamètres définissant une surface transversale qui partage l'ébauche **36** en deux volumes égaux.

Selon une caractéristique de l'invention et afin d'en faciliter le calcul, le diamètre $D_{max}$ sera défini comme étant le diamètre du cylindre dont la surface latérale partage l'ébauche **36** en deux volumes égaux. Ainsi, le diamètre $D_{max}$ vérifie la relation suivante :

$$\frac{\pi}{4}(D_{max})^2 \, hp = \frac{Ve + Vp}{2}$$

où :

- **hp** est la hauteur de l'ébauche hors bague, telle qu'illustré à la **fig. 14** avant étirement de l'ébauche, bien entendu,
- **Ve** est le volume de l'empreinte **41** du poinçon **5** hors bague.

Comme le montrent comparativement les **fig. 13** et **15,** selon le type de produit en verre creux fabriqué, le diamètre moyen $D_{moy}$, et donc le diamètre maximum de la surface d'aspiration, peut être supérieur ou inférieur au diamètre de l'embouchure de l'article en verre creux fabriqué. Ainsi, dans le cas de la fabrication d'une bouteille, comme illustrée à la **fig. 13**, le diamètre $D_{max}$ de la surface d'aspiration **23** sera supérieur au diamètre de l'embouchure de ladite bouteille, tandis que, dans le cas de la fabrication d'un pot, comme illustré à la **fig. 15,** le diamètre $D_{max}$ de la surface d'aspiration **23** sera inférieur au diamètre de l'embouchure de ladite bouteille.

Par ailleurs, selon une caractéristique préférée mais non strictement nécessaire de l'invention, afin de favoriser l'effet succion entre le fond **37** de l'ébauche **36** et la ventouse **15**, le fond **37** de l'ébauche **36** est concave.

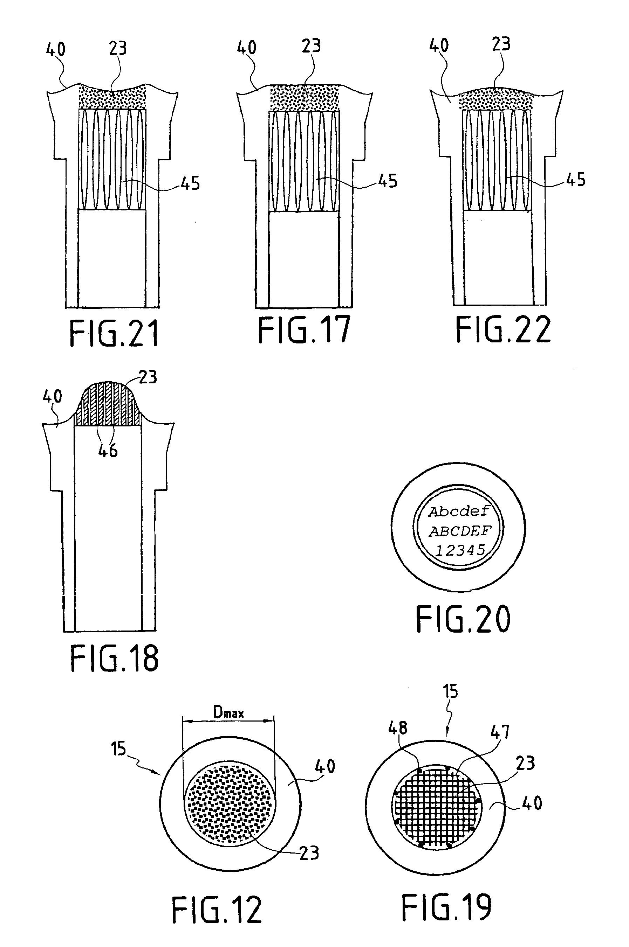

A cet effet, le fond **3** du moule ébaucheur **1** présente une forme convexe, comme le montre plus particulièrement la **fig. 1**. De manière préférée mais non strictement nécessaire, la profondeur maximum **P**, illustré **fig. 16**, de la concavité du fond **37** de l'ébauche **36** est comprise entre 1 mm et 30 mm et, de préférence, entre 1 mm et 5 mm. La dépression, établie au niveau de la ventouse **15** est, de préférence mais non exclusivement, inférieure à - 0,4.10$^5$ Pa et, de préférence, comprise entre-0,8.10$^5$ Pa et - 0,5.10$^5$ Pa.

Lorsque l'intégralité du fond **41** de l'ébauche **36,** en regard de la surface d'aspiration **23** se trouve en contact direct avec la ventouse **15**, comme illustré à la **fig. 7**, les moyens moteurs **17** sont commandés pour déplacer les ventouses **15** en course d'étirement depuis leur position d'extension maximale **E**.

Il doit être remarqué que, selon l'exemple illustré, afin de tenir compte des longueurs différentes des ébauches **36** lors de leur introduction dans les moules finisseurs **10**, suite aux forces centrifuges qu'elles ont subi lors de leur basculement, les courses d'étirement des ventouses sont décroissantes au fur et à mesure de l'éloignement des moules finisseurs par rapport à l'axe de rotation $\Delta'$ du bras basculeur **32** des moyens de transfert **31**. Ainsi, comme le montre plus particulièrement la **fig. 6**, la hauteur d'extension maximale de la ventouse du moule situé le plus proche de l'axe $\Delta'$ est supérieur à la hauteur d'extension **E** des moules plus éloignés de l'axe $\Delta'$, comme le montre plus particulièrement la **fig. 6.**

La longueur de la course d'étirage est, de plus, fonction de la hauteur de l'ébauche **36** ou hauteur de profil $h_p$ mesurée hors hauteur de bague par rapport à la hauteur $h_f$ de la cavité du moule finisseur hors éléments de bague, comme le montre la **fig. 15**. Selon l'invention, la hauteur $h_p$ du profil de l'ébauche est, de préférence, comprise entre 30 % et 75 % de la hauteur **h_f** du moule finisseur.

De manière préférée, selon l'invention, le déplacement des ventouses **15** intervient après l'établissement de la dépression au niveau de ces mêmes ventouses **15**, avec un décalage temporel d'une durée comprise entre 0,25 % et 3,5 % et, de préférence, entre 0,25 % et 2 % de la durée totale du cycle de fabrication. La descente des ventouses **15** est alors ensuite, de préférence, commandée de manière que la durée de la course d'étirement assisté soit inférieure à la moitié du temps que mettrait l'ébauche pour atteindre une même valeur d'étirement sous l'effet de son propre poids, de façon à garantir ainsi un gain suffisant de productivité.

Ainsi, la durée de la course d'étirement assistée est comprise, de préférence, entre 10 et 15 % de la durée totale du cycle de fabrication et, à cet effet, les moyens de déplacement **17** sont commandés pour faire varier la vitesse de déplacement de la ventouse au cours de la course d'étirement et, notamment, de manière de préférence à atteindre une vitesse maximale comprise entre 100 mm/s et 300 mm/s.

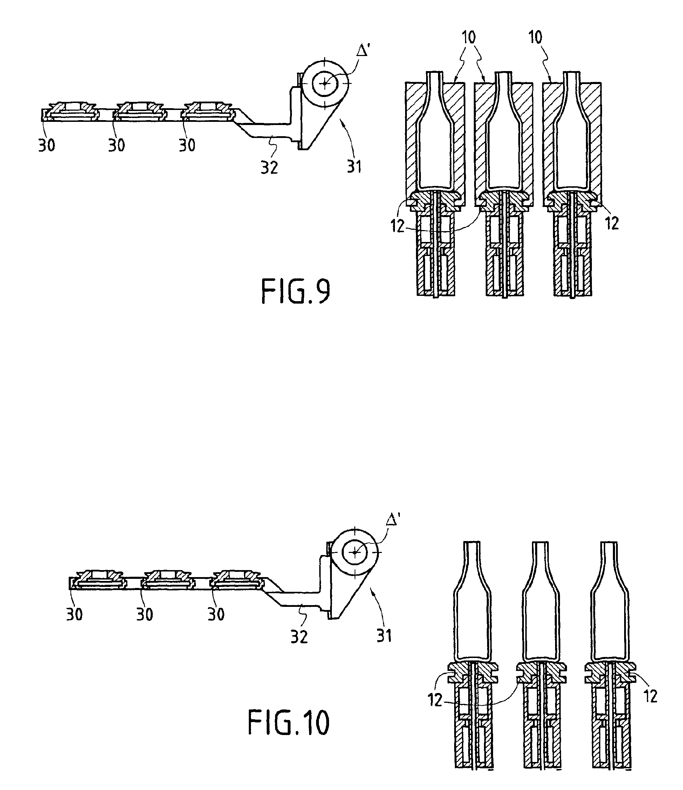

De telles valeurs de vitesses permettent ainsi d'assurer un gain substantiel de productivité, tout en n'engendrant pas des contraintes dans l'ébauche, susceptibles de faire apparaître des défauts d'aspect ou de structure. Ainsi, pendant la course d'étirement, les ventouses **15** passent de leur position maximale d'extension **E**, telle qu'illustrée à la **fig. 7,** à leur position de rétraction **R,** telle qu'illustrée à la **fig. 8,** dans laquelle les ventouses **15** sont encastrées dans les fonds **12** des moules finisseurs **10** et les ébauches **36** se trouvent étirées sur toute la hauteur de la cavité des moules.

Après cette phase d'étirement assisté intervient le gonflage des ébauches qui, selon l'exemple illustré, est effectué en établissant une dépression au sein de la cavité des moules finisseurs **10** dans le volume compris entre l'ébauche **36** et les parois du moule finisseur **10** correspondant. Ce gonflage permet ainsi de venir plaquer les parois des ébauches **36** contre les parois des moules finisseurs **10**, comme le montre la **fig. 9**, de manière à conférer aux ébauches **36** leur forme définitive correspondant aux produits creux en verre.

Après cette étape de gonflage, les moules finisseurs **10** sont ouverts, comme le montre la **fig. 10.** Un nouveau cycle de fabrication peut alors intervenir, les produits creux fabriqués étant par ailleurs pris en charge par des dispositifs de préhension, non représentés. Il est à noter que, selon l'exemple illustré, le bras basculeur **32** ne regagne sa position initiale **A** qu'en fin de phase d'étirement assisté. Toutefois, ce retour du bras basculeur à sa position **A** pourrait intervenir avant.

Par ailleurs, après le retrait des produits en verre creux finis, il est, de préférence, insufflé de l'air comprimé dans les ventouses, afin d'en assurer le refroidissement. En effet, il a été constaté qu'il est préférable de maintenir la température de la ventouse à une valeur inférieure à 500 °C et, de préférence, comprise entre 400 °C et 500 °C, afin d'éviter la formation de défauts au niveau du fond de l'article en verre creux fabriqué. Afin d'assurer ce refroidissement, l'air comprimé est injecté à une pression comprise entre $3.10^5$ Pa et $7.10^5$ Pa en présentant une température de préférence comprise entre 20 °C et 50 °C.

Selon une caractéristique de l'invention, afin d'optimiser le refroidissement des ventouses **15**, ces dernières présentent, au niveau de leur canal de raccordement au circuit pneumatique **22**, des ailettes ou cannelures **45**, comme cela est illustré à la **fig**. 17. Les ailettes **45** agissent alors à la manière de radiateurs en augmentant la surface d'échange de la ventouse avec l'air comprimé y circulant.

Conformément à l'invention, la surface d'aspiration des ventouses **15** peut être réalisée de toute façon appropriée.

Selon l'exemple illustré aux **fig. 12** et **17,** le matériau constitutif de la surface d'aspiration **23** est un matériau poreux tel que, par exemple, un métal fritté ou, encore, de la céramique. Bien entendu, la surface d'aspiration des ventouses **15** pourrait être réalisée d'une toute autre façon. Ainsi, la **fig. 18** illustre un cas de réalisation de la surface d'aspiration de la ventouse en un métal massif présentant une série de perçages **46** répartis à sa surface.

Selon une autre forme de réalisation, illustrée à la **fig. 19**, la surface d'aspiration **23** est réalisée sous la forme d'un bloc de métal moleté. La surface moletée présente alors, à sa périphérie, une gorge collectrice **47** raccordée, par des alésages traversants **48**, au circuit pneumatique. Différentes conformations de moletage peuvent être réalisées.

Par ailleurs, compte tenu de la mise en dépression effectuée au niveau de la surface d'aspiration **23**, qui garantit un contact intime entre le fond de l'ébauche **37** formée et la ventouse **15**, il est possible d'assurer un marquage au moyen de motifs relativement simples, du fond du produit de verre obtenu. Ainsi, la **fig. 20** illustre une forme de réalisation de la surface d'aspiration de la ventouse selon laquelle la surface d'aspiration présente des motifs alphabétiques et numériques. Bien entendu, toute autre sorte de motifs décoratifs, tels que par exemple des logos de marques ou des dessins géométriques, pourraient être envisagés.

De même, selon les exemples illustrés au **fig. 1** à **17,** la surface d'aspiration **23** présente un profil plan. Toutefois, selon l'invention, le profil de la surface d'aspiration **23** peut, également, être concave, comme illustré à la **fig. 22,** ou convexe, comme le montrent les **fig. 18** et **22.** Il est à noter que, selon l'exemple illustré **fig. 18**, la ventouse ne présente pas d'ailette interne.

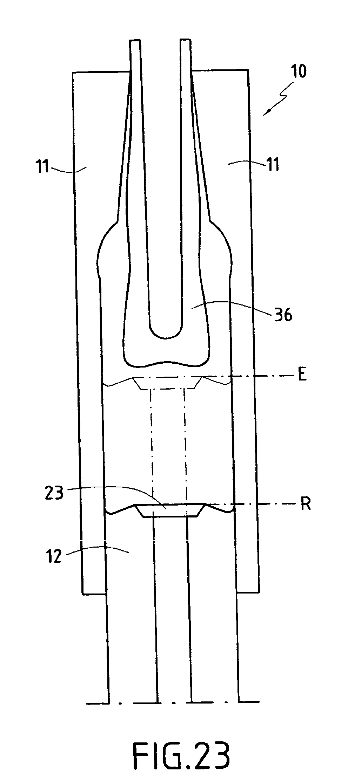

Par ailleurs, selon les exemples illustrés précédemment, la ventouse **15** du moule finisseur **10**, destinée à assurer l'étirement mécanique de l'ébauche, est mobile par rapport au fond **12** du moule finisseur **10**. Cependant, conformément à l'invention, une telle configuration n'est pas strictement nécessaire. Ainsi, la **fig. 23** prévoit le cas où la ventouse **15** est intégrée au fond **12**, ce dernier étant alors mobile dans son ensemble, entre la position d'extension **E** et la position de rétraction **R**, afin de pouvoir procéder à l'étirage mécanique de l'ébauche **36**.

Bien entendu, diverses autres modifications peuvent être apportées au procédé et à l'installation de fabrication d'articles en verre creux décrits précédemment, sans sortir du cadre de la présente invention.

## Revendications

**1.** Procédé de fabrication d'au moins un article en verre creux selon un cycle de fabrication consistant, notamment, à :

- former une ébauche (**36**) à partir d'une goutte de verre (**35**) en fusion au sein d'un moule ébaucheur (**1**),
- transférer l'ébauche (**36**) dans un moule finisseur (**10**) comprenant, dans une cavité de moulage, une ventouse (**15**) mobile en translation parallèle à l'axe (Δ) du moule (**10**) sur une course d'étirement entre, d'une part, une position d'extension (**E**) à l'intérieur du moule (**10**) et, d'autre part, une position de rétraction (**R**) dans laquelle la ventouse (**15**) est située au niveau du fond (**12**) du moule,
- établir une dépression au niveau de la ventouse (**15**) pour lier le fond de l'ébauche (**36**) à la ventouse placée en position d'extension (**E**),
- déplacer la ventouse jusqu'en position de rétraction (R) pour étirer l'ébauche (**36**),
- rétablir la pression atmosphérique au niveau de la ventouse (**15**),
- gonfler l'ébauche étirée (**36**) à l'intérieur du moule finisseur (**10**), afin d'obtenir l'article creux en verre,
- ouvrir le moule finisseur (**10**),
- et extraire l'article creux en verre du moule finisseur,

**caractérisé en ce qu'**il consiste à établir la dépression au niveau de la ventouse (**15**) avant que le fond de l'ébauche (**36**) ne soit au contact de la ventouse (**15**).

**2.** Procédé selon la revendication 1, **caractérisé en ce qu'**il consiste à établir la dépression au niveau de la ventouse (**15**) lorsque la distance entre la ventouse et le fond de l'ébauche est inférieure à 10 mm et, de préférence, comprise entre 1,5 mm et 2,5 mm.

**3.** Procédé de fabrication selon la revendication 1 ou 2, **caractérisé en ce qu'**il consiste à établir la dépression au niveau de la ventouse (**15**) après un déroulement de 83 % à 90 % du cycle de fabrication.

**4.** Procédé de fabrication selon l'une des revendications 1 à 3, **caractérisé en ce que** le déplacement de la ventouse (**15**) intervient après l'établissement de la dépression au niveau de la ventouse (**15**) avec un décalage temporel d'une durée comprise entre 0,25 % et 2 % de la durée totale du cycle de fabrication.

**5.** Procédé selon l'une des revendications 1 à 4, **caractérisé en ce que** la durée de la course d'étirement assisté est inférieure à la moitié du temps mis par l'ébauche (**36**) pour atteindre une même valeur d'étirement sous l'effet de son poids propre.

**6.** Procédé selon l'une des revendications 1 à 5, **caractérisé en ce que** la durée de la course d'étirement assisté est comprise entre 10 % et 15 % de la durée totale du cycle de fabrication.

**7.** Procédé selon l'une des revendications 1 à 6, **caractérisé en ce qu'**il consiste à déplacer la ventouse (**15**) en phase d'étirement de l'ébauche (**36**) en faisant varier sa vitesse au cours du déplacement.

**8.** Procédé selon la revendication 7, **caractérisé en ce qu'**il consiste à faire varier la vitesse de déplacement de la ventouse (**15**) jusqu'à atteindre une vitesse maximale comprise entre 100 mm/s et 300 mm/s.

**9.** Procédé selon l'une des revendications 1 à 8, **caractérisé en ce que** la valeur de la dépression, établie dans la ventouse (**15**), est inférieure à - 0,4.$10^5$ Pa et, de préférence, comprise entre - 0,8.$10^5$ et - 0,5. $10^5$ Pa.

**10.** Procédé selon l'une des revendications 1 à 9, **caractérisé en ce que** la goutte de verre en fusion possède une température comprise entre 1 100 °C et 1 200 °C.

**11.** Procédé selon l'une des revendications 1 à 10, **caractérisé en ce qu'**il consiste, après extraction de l'article de verre, à injecter un fluide de refroidissement dans la ventouse (**15**).

**12.** Procédé selon la revendication 11, **caractérisé en ce qu'**il consiste à maintenir la ventouse (**15**) à une température inférieure à 500 °C et, de préférence, comprise entre 400 °C et 500 °C.

**13.** Procédé selon la revendication 12, **caractérisé ce que** le fluide de refroidissement est de l'air comprimé à une pression comprise entre $3.10^5$ Pa et $7.10^5$ Pa, présentant une température comprise entre 20 °C et 50 °C.

**14.** Procédé selon l'une des revendications 1 à 13, **caractérisé en ce qu'**il consiste à former l'ébauche (**36**) de manière à ce qu'elle présente, lors de son introduction dans le moule finisseur, un fond concave (**37**).

**15.** Procédé selon la revendication 14, **caractérisé en ce qu'**il consiste à former l'ébauche de manière que la profondeur maximum (**P**) de la concavité de son fond (**37**) soit comprise entre 1 mm et 30 mm et, de préférence, entre 1 mm et mm.

**16.** Procédé selon l'une des revendications 1 à 15, **caractérisé en ce qu'**il consiste à former l'ébauche (**36**) de manière qu'elle présente une hauteur ($h_p$) comprise entre 30 % et 75 % de la hauteur ($h_f$) du moule finisseur (**10**).

**17.** Procédé selon l'une des revendications 1 à 16, **caractérisé en ce que** le gonflage de l'ébauche (**36**) est assuré par une mise en dépression du moule finisseur (**10**).

**18.** Procédé selon l'une des revendications 1 à 16, **caractérisé en ce que** le gonflage de l'ébauche (**36**) est assuré par un soufflage de gaz dans l'ébauche (**36**).

**19.** Procédé de fabrication selon l'une des revendications 1 à 18, **caractérisé en ce qu'**il consiste, pour fabriquer simultanément une série de **n** articles creux en verre identiques, notamment à :

■ former **n** ébauches (**35**) de **n** moules ébaucheurs (**1**),
■ transférer simultanément les **n** ébauches (**35**) dans n moules finisseurs (**10**) comprenant chacun, dans leur cavité de moulage (**13**), une ventouse de traction (**15**) mobile en translation parallèle à l'axe du moule sur une course d'étirement entre, d'une part, une position d'extension (**E**) à l'intérieur de la cavité de moulage (**13**) et une position de rétraction (**R**) dans laquelle la ventouse est située, au niveau du fond (**12**) de la cavité de moulage (**13**),
■ établir simultanément la dépression au niveau des **n** ventouses (**15**),
■ déplacer simultanément les **n** ventouses (**15**) jusqu'en position de rétraction (**R**),
■ rétablir simultanément la pression atmosphérique au niveau des **n** ventouses (**15**),
■ gonfler simultanément les **n** ébauches étirées (**36**),
■ ouvrir simultanément les **n** moules finisseurs (**10**),
■ et extraire simultanément les **n** articles creux des n moules finisseurs.

**20.** Procédé de fabrication selon la revendication 19, **caractérisé en ce qu'**il consiste à adopter, pour les ventouses (**15**) des **n** moules, des longueurs de course différentes.

**21.** Procédé de fabrication selon la revendication 20, **caractérisé en ce qu'**il consiste à :

■ mettre en oeuvre, pour transférer les **n** ébauches (**36**) depuis les moules ébaucheurs (**1**) vers les moules finisseurs (**10**), un mécanisme basculeur (**32**) qui, par une rotation de 180° autour d'un axe (Δ')**,** assure l'extraction des ébauches (**36**) hors des moules ébaucheurs (**1**) et leur engagement, avec une inversion d'orientation, dans les moules finisseurs (**10**),
■ et adopter pour les ventouses (**15**) des courses d'étirement décroissantes au fur et à mesure de l'éloignement des moules finisseurs (**10**) par rapport à l'axe de rotation (Δ') du mécanisme basculeur (**32**).

**22.** Installation pour la fabrication d'au moins un article creux en verre comprenant, notamment, au moins un ensemble de moulage qui comprend :

■ un moule ébaucheur (**1**) comprenant deux demi-corps ébaucheurs (**2**) et un fond ébaucheur (**3**) définissant ensemble une empreinte d'ébauche (**4**),
■ un moule finisseur (**10**) qui comprend, d'une part, deux demi-corps finisseurs (**11**) et un fond finisseur (**12**) définissant une cavité de moulage (**13**) et, d'autre part, des moyens d'étirage assisté comprenant :

- une ventouse (**15**) portée par un organe (**16**) mobile en translation selon l'axe du moule (Δ) pour déplacer la ventouse (**15**) entre une position d'extension (**E**) dans le moule et une position de rétraction (**R**) dans laquelle la ventouse est située au niveau du fond du moule (**12**),
- des moyens moteurs (**17**) pour manoeuvrer l'organe mobile (**16**),
- un circuit pneumatique (**22**) raccordé à la ventouse,

■ un élément de bague (**30**) et des moyens de transfert (**31**) alternatif de l'élément de bague (**30**) entre le moule ébaucheur (**1**) et le moule finisseur (10),
**caractérisé :**

■ **en ce que** la ventouse (**15**) présente une surface centrale d'aspiration (**23**) raccordée au circuit pneumatique (**22**) et une surface périphérique étanche à l'air,
■ et **en ce que** la surface d'aspiration de la ventouse présente un diamètre (**D$_{max}$**) maximum égal au diamètre moyen (**D$_{moy}$**) de l'ébauche à étirer.

23. Installation selon la revendication 22, **caractérisée en ce que** le moule ébaucheur comprend un poinçon (**5**) et **en ce que** le diamètre maximum (**D$_{max}$**) de la ventouse vérifie la relation suivante :

$$\frac{\pi}{4}(\mathbf{D}_{max})^2 \, hp = \frac{V_e + V_p}{2}$$

où :

- **hp** est la hauteur de l'ébauche (**36**) hors bague,
- **Ve** est le volume de l'empreinte d'ébauche (**4**),
- **Vp** est le volume de l'empreinte (**41**) du poinçon (**5**) hors bague.

24. Installation selon la revendication 22 ou 23, **caractérisée en ce que** la surface d'aspiration (**23**) de la ventouse est constituée par un matériau poreux.

25. Installation selon la revendication 24, **caractérisée en ce que** la surface d'aspiration (**23**) de la ventouse est constituée par du métal fritté.

26. Installation selon la revendication 24, **caractérisée en ce que** la surface d'aspiration de la ventouse (**23**) est constituée par de la céramique.

27. Installation selon la revendication 22 ou 24 **caractérisée en ce que** la surface d'aspiration (**23**) de la ventouse présente un moletage et comprend une gorge périphérique annulaire collectrice raccordée au circuit pneumatique (**22**).

28. Installation selon l'une des revendications 22 à 27 **caractérisée en ce que** la surface d'aspiration (**23**) de la ventouse présente un relief ou une empreinte destinée à former un motif sur le fond de l'article de verre creux.

29. Installation selon l'une des revendications 22 à 28, **caractérisée en ce que** la ventouse (**15**) présente des ailettes de refroidissement s'étendant dans un conduit de raccordement de la ventouse au circuit pneumatique (**22**).

30. Installation selon l'une des revendications 22 à 29, **caractérisée en ce que** la ventouse (**15**) est intégrée au fond (**12**) du moule finisseur (**10**) qui forme l'organe mobile en translation pour l'étirage de l'ébauche (**36**).

31. Installation selon l'une des revendications 22 à 30, **caractérisée en ce que** le fond (**3**) du moule ébaucheur (**1**) est convexe.

32. Installation selon la revendication 31, **caractérisée en ce que** la convexité du fond (**3**) du moule ébaucheur (**1**) est comprise entre 1 mm et 30 mm.

**Claims**

1. A method for manufacturing at least one hollow glass article according to a manufacturing cycle, notably consisting of:

   • forming a blank (36) from a molten drop of glass (35) within a blank mold (1),
   • transferring the blank (36) into a finishing mold (10) comprising in a molding cavity a suction cup (15) translationally mobile parallel to the axis (Δ) of the mold (10) over a drawing stroke between an extension position (E) inside the mold (10) on the one hand and a retraction position (R) on the other hand, in which the suction cup (15) is located at the bottom (12) of the mold,
   • establishing a depression at the suction cup (15) to fasten the bottom of the blank (36) to the suction cup placed in the extension position (E),
   • displacing the suction cup up to the retraction position (R) in order to draw the blank (36),
   • re-establishing atmospheric pressure at the suction cup (15),
   • inflating the drawn blank (36) inside the finishing mold (10) in order to obtain a hollow glass article,
   • opening the finished mold (10),
   • and extracting the hollow glass article from the finishing mold,

   **characterized in that** it consists of establishing the depression at the suction cup (15) before the bottom of the blank (36) is in contact with the suction cup (15).

2. The method according to claim 1, **characterized in that** it consists of establishing the depression at the suction cup (15) when the distance between the suction cup and the bottom of the blank is less than 10 mm and preferably between 1.5 mm and 2.5 mm.

3. The manufacturing method according to claim 1 or 2, **characterized in that** it consists of establishing the depression at the suction cup (15) after 83% to 90% of the manufacturing cycle has elapsed.

4. The manufacturing method according to any of claims 1 to 3, **characterized in that** the displacement of the suction cup (15) occurs after establishing the depression at the suction cup (15) with a time delay period between 0.25% and 2% of the total manufacturing cycle time.

5. The method according to any of claims 1 to 4, **characterized in that** the duration of the assisted drawing stroke is less than half the time taken by the blank (36) to reach a same drawing level under the effect of its own weight.

6. The method according to any of claims 1 to 5, **characterized in that** the duration of the assisted drawing stroke is between 10% and 15% of the total manufacturing cycle time.

7. The method according to any of claims 1 to 6, **characterized in that** it consists of displacing the suction cup (15) in the drawing phase of the blank (36) by varying its velocity during displacement.

8. The method according to claim 7, **characterized in that** it consists of varying the displacement velocity of the suction cup (15) until it reaches a maximum velocity between 100 m/s and 300 m/s.

9. The method according to any of claims 1 to 8, **characterized in that** the value of the depression established in the suction cup (15) is less than $-0.4 \cdot 10^5$ Pa, and is preferably between $-0.8 \cdot 10^5$ and $-0.5 \cdot 10^5$ Pa.

10. The method according to any of claims 1 to 9, **characterized in that** the molten glass drop has a temperature between 1,100° C, and 1,200°C.

11. The method according to any of claims 1 to 10, **characterized in that** after extracting the glass article, it consists of injecting a cooling fluid into the suction cup (15).

12. The method according to claim 11, **characterized in that** it consists of maintaining the suction cup (15) at a temperature less than 500°C, and preferably between 400°C and 500°C.

13. The method according to claim 12, **characterized in that** the cooling fluid is compressed air at a pressure between $3.10^5$ Pa and $7.10^5$ Pa, with a temperature between 20°C and 50°C.

**14.** The method according to any of claims 1 to 13, **characterized in that** it consists of forming the blank (36) so that it has a concave bottom (37) when it is introduced into the finishing mold.

**15.** The method according to claim 14, **characterized in that** it consists of forming the blank so that the maximum depth (P) of the concavity of its bottom (37) is between 1 mm and 30 mm and preferably between 1 mm and 5 mm.

**16.** The method according to any of claims 1 to 15, **characterized in that** consists of forming the blank (36) so that it has a height ($h_p$) between 30% and 75% of the height ($h_f$) of the finishing mold (10).

**17.** The method according to any of claims 1 to 16, **characterized in that** inflating the blank (36) is provided by establishing a depression in the finishing mold (10).

**18.** The method according to any of claims 1 to 16, **characterized in that** inflating the blank (36) is provided by blowing gas into the blank (36).

**19.** The method according to any of claims 1 to 18, **characterized in that**, in order to simultaneously manufacture a series of **n** identical glass hollow articles, it notably consists of:

- forming **n** blanks (35) from **n** blank molds (1),
- simultaneously transferring the **n** blanks (35) into **n** finishing molds (10) each comprising in their molding cavity (13) a traction and suction cup (15) translationally mobile parallel to the axis of the mold over a drawing stroke between an extension position (E) inside the molding cavity (13) on the one hand, and a retraction position (R) on the other hand, in which the suction cup is located at the bottom (12) of the molding cavity (13),
- simultaneously establishing the depression at the **n** suction cups (15),
- simultaneously displacing the **n** suction cups (15) up to the retraction position (R),
- simultaneously re-establishing atmospheric pressure at the **n** suction cups (15),
- simultaneously inflating the **n** drawn blanks (36),
- simultaneously opening the **n** finishing molds (10),
- and simultaneously extracting the **n** hollow articles from the **n** finishing molds.

**20.** The method according to claim 19, **characterized in that** it consists of adopting different stroke lengths for the suction cups (15) of the **n** molds.

**21.** The method according to claim 20, **characterized in that** it consists of:

- applying for transferring the **n** blanks (36) from the blank molds (1) to the finishing molds (10), a swinging mechanism (32) which, by 180° rotation around an axis (Δ'), provides the extraction of the blanks (36) out of the blank molds (1) and their engagement with inversion of orientation into the finishing molds (10),
- and adopting for the suction cups (15), drawing strokes which decrease with increasing distance of the finishing molds (10) from the axis of rotation (Δ') of the swinging mechanism (32).

**22.** An installation for manufacturing at least one glass hollow article notably comprising at least one molding assembly which comprises:

- a blank mold (1) comprising two blank half-bodies (2) and a blank bottom (3) defining together a blank imprint (4),
- a finishing mold (10) which comprises two finishing half-bodies (11) and a finishing bottom (12) defining a molding cavity (13) on the one hand, and assisted drawing means on the other hand, comprising:

    - a suction cup (15) borne by a member (16) translationaly mobile along the axis of the mold (Δ) in order to displace the suction cup (15) between an extension position (E) in the mold and a retraction position (R) in which the suction cup is located at the bottom of the mold (12),
    - motor means (17) for maneuvering the mobile member (16),
    - a pneumatic circuit (22) connected to the suction cup,

- a ring component (30) and means for alternate transfer (31) of the ring component (30) between the blank mold (1) and the finishing mold (10),

**characterized:**

• **in that** the suction cup (15) has a central suction surface (23) connected to the pneumatic circuit (22) and a peripheral air-proof surface,
• and **in that** the suction surface of the suction cup has a maximum diameter ($D_{max}$) equal to the average diameter ($D_{moy}$) of the blank to be drawn.

23. The installation according to claim 22, **characterized in that** the blank mold comprises a punch (5) and **in that** the maximum diameter ($D_{max}$) of the suction cup verifies the following relationship:

$$\frac{\pi}{4}\left(D_{max}\right)^2 hp = \frac{Ve + Vp}{2}$$

wherein:

- hp is the height of the blank (36) excluding the ring,
- Ve is the volume of the blank imprint (4),
- Vp is the volume of the imprint (41) of the punch (5) excluding the ring.

24. The installation according to claim 22 or 23, **characterized in that** the suction surface (23) of the suction cup consists of porous material.

25. The installation according to claim 24, **characterized in that** the suction surface (23) of the suction cup consists of sintered metal.

26. The installation according to claim 24, **characterized in that** the suction surface of the suction cup (23) consists of ceramic.

27. The installation according to claim 22 or 24, **characterized in that** the suction surface (23) of the suction cup has a knurling and comprises a collecting annular peripheral groove connected to the pneumatic circuit (22).

28. The installation according to claims 22 to 27, **characterized in that** the suction surface (23) of the suction cup has a relief or an imprint intended for forming a pattern on the bottom of the hollow glass article.

29. The installation according to claims 22 to 28, **characterized in that** the suction cup (15) has cooling fins extending in a duct for connecting the suction cup to the pneumatic circuit (22).

30. The installation according to claims 22 to 29, **characterized in that** the suction cup (15) is integrated at the bottom (12) of the finishing mold (10) which forms the translationally mobile member for drawing the blank (36).

31. The installation according to claims 22 to 30, **characterized in that** the bottom (3) of the blank mold (1) is convex.

32. The installation according to claim 31, **characterized in that** the convexity of the bottom (3) of the blank mold (1) is between 1 mm and 30 mm.

**Patentansprüche**

1. Verfahren zur Herstellung mindestens eines hohlen Glasartikels gemäß einem Herstellungsgang, der insbesondere besteht in:

■ der Ausbildung eines Entwurfs (**36**) aus einem Tropfen (**35**) einer Glasschmelze in einer Füllform (**1**),
■ der Übertragung des Entwurfs (**36**) in eine Fertigungsform (**10**), die in einer Formenaushöhlung einen Saugnapf (**15**) umfaßt, der mit Translation parallel zur Achse (△) der Form (**10**) auf einer Ziehlänge zwischen einerseits einer Streckungsposition (**E**) innerhalb der Form (**10**) und andererseits einer Retraktionsposition (**R**), in der der Saugnapf (**15**) auf der Ebene des Bodens (**12**) der Form liegt, beweglich ist,
■ dem Etablieren eines Unterdrucks auf der Ebene des Saugnapfes (**15**), um den Boden des Entwurfs (**36**) mit dem Saugnapf, der in Streckungsposition (**E**) gestellt wird, zu verbinden,

■ dem Bewegen des Saugnapfes bis zur Retraktionsposition (**R**), um den Entwurf (**36**) zu strecken,
■ der Wiederherstellung des Atmosphärendrucks auf der Ebene des Saugnapfes (**15**),
■ dem Blasen des gestreckten Entwurfs (**36**) innerhalb der Fertigungsform (**10**), um den hohlen Glasartikel zu erhalten,
■ dem Öffnen der Fertigungsform (**10**),
■ dem Entnahmen des hohlen Glasartikels aus der Fertigungsform,

**dadurch gekennzeichnet, daß** es darin besteht, den Unterdruck auf der Ebene des Saugnapfes (**15**) zu etablieren, bevor der Boden des Entwurfs (**16**) im Kontakt mit dem Saugnapf (**15**) ist.

2. Verfahren nach Anspruch 1, **dadurch gekennzeichnet, daß** es darin besteht, den Unterdruck auf der Ebene des Saugnapfes (**15**) dann zu etablieren, wenn der Abstand zwischen dem Saugnapf und dem Boden des Entwurfs kleiner als 10 mm ist und vorzugsweise zwischen 1,5 mm und 2,5 mm liegt.

3. Herstellungsverfahren nach einem der Ansprüche 1 oder 2, **dadurch gekennzeichnet, daß** es darin besteht, den Unterdruck auf der Ebene des Saugnapfes (**15**) nach dem Ablauf von 83% bis 90% des Herstellungsgangs zu etablieren.

4. Herstellungsverfahren nach einem der Ansprüche 1 bis 3, **dadurch gekennzeichnet, daß** das Verschieben des Saugnapfes (**15**) nach dem Festsetzen des Unterdrucks auf der Ebene des Saugnapfes (**15**) mit einer zeitlichen Verzögerung, deren Dauer zwischen 0,25% und 2% der Gesamtdauer des Herstellungsgangs liegt, erfolgt.

5. Verfahren nach einem der Ansprüche 1 bis 4, **dadurch gekennzeichnet, daß** die Dauer des unterstützten Streckungslaufes kleiner ist als die Hälfte der Zeit, die von dem Entwurf (**36**) gebraucht wird, um einen selben Streckungswert unter der Wirkung seines eigenen Gewichts zu erreichen.

6. Verfahren nach einem der Ansprüche 1 bis 5, **dadurch gekennzeichnet, daß** die Dauer des unterstützten Streckungslaufes zwischen 10% und 15% der Gesamtdauer des Herstellungsganges liegt.

7. Verfahren nach einem der Ansprüche 1 bis 6, **dadurch gekennzeichnet, daß** es darin besteht, unter Varüeren seiner Geschwindigkeit während des Verschiebens den Saugnapf (**15**) in der Streckungsphase des Entwurfs (**36**) zu bewegen.

8. Verfahren nach Anspruch 7, **dadurch gekennzeichnet, daß** es darin besteht, die Geschwindigkeit des Verschiebens des Saugnapfes (**15**) zu ändern, bis eine maximale Geschwindigkeit, die zwischen 100 mm/s und 300 mm/s liegt, erreicht wird.

9. Verfahren nach einem der Ansprüche 1 bis 8, **dadurch gekennzeichnet, daß** der Wert des Unterdrucks, der in dem Saugnapf (**15**) etabliert wird, kleiner als $-0,4 \cdot 10^5$ Pa ist und vorzugsweise zwischen $-0,8 \cdot 10^5$ und $-0,5 \cdot 10^5$ Pa liegt.

10. Verfahren nach einem der Ansprüche 1 bis 9, **dadurch gekennzeichnet, daß** der Tropfen einer Glasschmelze eine Temperatur aufweist, die zwischen 1100 °C und 1200 °C liegt.

11. Verfahren nach einem der Ansprüche 1 bis 10, **dadurch gekennzeichnet, daß** es darin besteht, ein Kühlfluid in den Saugnapf (**15**) nach dem Entnehmen des Glasartikels einzuspritzen.

12. Verfahren nach Anspruch 11, **dadurch gekennzeichnet, daß** es darin besteht, den Saugnapf (**15**) bei einer Temperatur zu halten, die kleiner als 500 °C ist und die vorzugsweise zwischen 400 °C und 500 °C liegt.

13. Verfahren nach Anspruch 12, **dadurch gekennzeichnet, daß** das Kühlfluid auf einen Druck zwischen $3 \cdot 10^5$ Pa und $7 \cdot 10^5$ Pa komprimierte Luft ist und eine Temperatur von zwischen 20 °C und 50 °C aufweist.

14. Verfahren nach einem der Ansprüche 1 bis 13, **dadurch gekennzeichnet, daß** es darin besteht, den Entwurf (**36**) derart auszubilden, daß er einen konkaven Boden (**37**) bei der Einführung in die Fertigungsform aufweist.

15. Verfahren nach Anspruch 14, **dadurch gekennzeichnet, daß** es darin besteht, den Entwurf derart auszubilden, daß die maximale Tiefe (**P**) der Konkavität seines Bodens (**37**) zwischen 1 mm und 30 mm und vorzugsweise zwischen 1 mm und 5 mm liegt.

16. Verfahren nach einem der Ansprüche 1 bis 15, **dadurch gekennzeichnet, daß** es darin besteht, den Entwurf (**36**) derart auszubilden, daß er eine Höhe ($h_p$) aufweist, die zwischen 30% und 75% der Höhe ($h_f$) der Fertigungsform (**10**) liegt.

17. Verfahren nach einem der Ansprüche 1 bis 16, **dadurch gekennzeichnet, daß** das Blasen des Entwurfs (**36**) durch das Setzen der Fertigungsform in Unterdruck gesichert ist.

18. Verfahren nach einem der Ansprüche 1 bis 16, **dadurch gekennzeichnet, daß** das Blasen des Entwurfs (**36**) durch das Blasen von Gas in den Entwurf (**36**) gesichert ist.

19. Herstellungsverfahren nach einem der Ansprüche 1 bis 18, **dadurch gekennzeichnet, daß** es um eine Reihe von **n** identischen hohlen Glasartikeln simultan herzustellen insbesondere besteht in:

  ■ der Ausbildung von n Entwürfen (**35**) in **n** Füllformen (1),
  ■ der simultanen Übertragung der **n** Entwürfe (**35**) in n Fertigungsformen (**10**), wobei jede in ihrer Formenaushöhlung (**13**) einen Zugsaugnapf (**15**) umfaßt, der in Translation parallel zur Achse der Form auf einer Ziehlänge zwischen einerseits einer Streckungsposition (**E**) innerhalb der Formenaushöhlung (**13**) und andererseits einer Retraktionsposition (**R**), in der der Saugnapf auf der Ebene des Bodens (**12**) der Höhlung der Form (**13**) liegt, beweglich ist,
  ■ dem simultanen Etablieren eines Unterdrucks auf der Ebene der **n** Saugnäpfe (**15**),
  ■ dem simultanen Bewegen der **n** Saugnäpfe (**15**) bis zur Retraktionsposition (**R**),
  ■ der simultanen Wiederherstellung des Atmosphärendrucks auf der Ebene der **n** Saugnäpfe (**15**),
  ■ dem simultanen Blasen der **n** gestreckten Entwürfe (**36**),
  ■ dem simultanen Öffnen der **n** Fertigungsformen (**10**),
  ■ dem simultanen Entnehmen der **n** hohlen Glasartikel aus den **n** Fertigungsformen.

20. Herstellungsverfahren nach Anspruch 19, **dadurch gekennzeichnet, daß** es darin besteht, unterschiedliche Lauflängen für die Saugnäpfe (**15**) der n Formen anzunehmen.

21. Herstellungsverfahren nach Anspruch 20, **dadurch gekennzeichnet, daß** es besteht in:

  ■ dem Einsatz eins Kippmechanismus (**32**), der durch eine Drehung um 180° um eine Achse (Δ') die Entnahme der Entwürfe (**36**) aus den Füllformen (**1**) und ihre Einfügung mit einer umgekehrten Orientierung in die Fertigungsformen (**10**), um die **n** Entwürfe (**36**) von den Füllformen (**1**) zu den Fertigungsformen (**10**) zu übertragen,
  ■ und das Annehmen von abnehmenden Ziehlängen für die Saugnäpfe (**15**), je nach der Entfernung der Fertigungsformen (**10**) in Bezug auf die Drehachse (Δ') des Kippmechanismus (**32**).

22. Anlage zur Herstellung mindestens eines hohlen Glasartikels, umfassend insbesondere mindestens eine Formanordnung, welche umfaßt:

  ■ eine Füllform (**1**), die aus zwei Füllhalbkörpern (**2**) und einem Füllboden (**3**), die zusammen einen Entwurfsabdruck (**4**) definieren, besteht,
  ■ eine Fertigungsform (**10**), die einerseits zwei Fertigungshalbkörper (**11**) und einen Fertigungsboden (**12**) umfaßt, die eine Formaushöhlung (**13**) definieren und andererseits Mittel zur unterstützten Streckung, umfassend:

    - einen Saugnapf (**15**), der von einem Organ (**16**) getragen ist, das mit Translation gemäß der Achse (Δ) der Form beweglich ist, um den Saugnapf (**15**) zwischen einer Streckungsposition (**E**) innerhalb der Form und einer Retraktionsposition (**R**), in der der Saugnapf auf der Ebene des Bodens der Form (**12**) liegt, zu bewegen,
    - Antriebsmittel (**17**), um das bewegliche Organ (**16**) zu steuern,
    - einen pneumatischen Kreislauf (**22**), der mit dem Saugnapf verbunden ist,

  ■ ein Ringelement (**30**) und Mitteln zur wechselnden Überführung (**31**) des Ringelements (**30**) zwischen der Füllform (**1**) und der Fertigungsform (**10**),
  **dadurch gekennzeichnet, daß**:

    - der Saugnapf (**15**) eine zentrale Absaugungsfläche (**23**) aufweist, die mit dem pneumatischen Kreislauf (**22**) verbunden ist und eine luftdichte Peripheriefläche,
- und, daß die Absaugungsfläche des Saugnapfes einen maximalen Durchmesser (**D$_{max}$**) aufweist, der gleich dem Durchschnittsdurchmesser (**D$_{moy}$**) des zu streckenden Entwurfs ist.

23. Anlage nach Anspruch 22, **dadurch gekennzeichnet, daß** die Füllform einen Pfriem (**5**) umfaßt und daß der maximale Durchmesser (**D$_{max}$**) des Saugnapfes die folgende Beziehung erfüllt:

$$\frac{\pi}{4}\,(D_{max})^2\,hp\ =\ \frac{v_e + v_p}{2}$$

wobei:

   - **hp** die Höhe des Entwurfs (**36**) ohne Ring ist,
   - **Ve** der Volumen des Entwurfsabdrucks (**4**) ist,
   - **Vp** der Volumen des Abdrucks (**41**) des Pfriems (**5**) ohne Ring ist.

24. Anlage nach einem der Ansprüche 22 oder 23, **dadurch gekennzeichnet, daß** die Absaugungsfläche (**23**) des Saugnapfes aus einem porösen Material besteht.

25. Anlage nach Anspruch 24, **dadurch gekennzeichnet, daß** die Absaugungsfläche (**23**) des Saugnapfes aus einem Sintermetall besteht.

26. Anlage nach Anspruch 24, **dadurch gekennzeichnet, daß** die Absaugungsfläche (**23**) des Saugnapfes aus Keramik besteht.

27. Anlage nach einem der Ansprüche 22 oder 24, **dadurch gekennzeichnet, daß** die Absaugungsfläche (**23**) des Saugnapfes eine Rändelung aufweist und, daß sie eine peripherische Sammelungsringgut, die mit dem pneumatischen Kreislauf (**22**) verbunden ist, umfaßt.

28. Anlage nach einem der Ansprüche 22 bis 27, **dadurch gekennzeichnet, daß** die Absaugungsfläche (**23**) des Saugnapfes eine Erhöhung oder einen Abdruck, der dafür bestimmt ist, ein Druckmuster an dem Boden des hohlen Glasartikels zu bilden, umfaßt.

29. Anlage nach einem der Ansprüche 22 bis 28, **dadurch gekennzeichnet, daß** der Saugnapf (**15**) Kühlrippen, die sich in einer Leitung zur Verbindung des Saugnapfes mit dem pneumatischen Kreislauf (**22**) erstrecken, aufweist.

30. Anlage nach einem der Ansprüche 22 bis 29, **dadurch gekennzeichnet, daß** der Saugnapf (**15**) in dem Boden (**12**) der Fertigungsform (**10**), der das bewegliche Organ zur Streckung des Entwurfs (**36**) bildet, eingebaut ist.

31. Anlage nach einem der Ansprüche 22 bis 30, **dadurch gekennzeichnet, daß** der Boden (**3**) der Füllform (**1**) konvex ist.

32. Anlage nach Anspruch 31, **dadurch gekennzeichnet, daß** die Konvexität des Bodens (**3**) der Füllform zwischen 1 mm und 30 mm liegt.

FIG.1

FIG.2

18

FIG.3

FIG.4

FIG.5

FIG.6

FIG.7

FIG.8

FIG.9

FIG.10

FIG.16

FIG.11

FIG.14

Dmax

36

23

15

22

## FIG.13

Dmax

23

22

## FIG.15

FIG.21

FIG.17

FIG.22

FIG.18

FIG.20

FIG.12

FIG.19

FIG.23